# EUROPÄISCHE PATENTANMELDUNG

(11) **EP 1 876 376 A1**
(43) Veröffentlichungstag der Anmeldung: **09.01.2008**
(21) Anmeldenummer: 07111369.0
(22) Anmeldetag: 29.06.2007
(51) Int. Cl.: F16H 57/02, F16H 61/00

(54) **Getriebesystem**

(30) Priorität: 07.07.2006 DE 102006031444
(71) Anmelder: ZF Friedrichshafen AG, 88038 Friedrichshafen (DE)
(72) Erfinder: Ronge, Ludger, 88097 Eriskirch (DE); Bader, Josef, 88045 Friedrichshafen (DE); Birkenmaier, Gerhard, 88069 Tettnang-Walchesreute (DE); Graf, Andreas, 78333, Stockach - Wahlwies (DE); Heinzelmann, Karl-Fritz, 88074 Meckenbeuren (DE); König, Hubert, 88074 Meckenbeuren (DE); Vetter, Manfred, 88048 Friedrichshafen (DE); Höring, Gerhard, 88709 Hagnau (DE); Schuh, Henrik, 88045 Friedrichshafen (DE); Führer, Kim, 88131 Lindau (DE); Ulbricht, Markus, 88069 Tettnang (DE); Steinborn, Mario, 88046 Friedrichshafen (DE); Heinrich, Kai, 88285 Bodnegg (DE); Gessler, Frank, 88287 Grünkraut (DE); Wöhr, Klaus, 88074 Meckenbeuren (DE); Walter, Bernhard, 88048 Friedrichshafen (DE)

(57) **Zusammenfassung**

Es wird ein Getriebesystem, insbesondere ein Handschaltgetriebe, Automatgetriebe oder automatisiertes Getriebe vorgeschlagen, bei dem die Luft- und Elektroanschlüsse der Getriebesystemkomponenten zusammengefasst sind, wobei, wenn dies konstruktiv möglich ist, jeweils ein Anschluss pro Getriebesystem vorgesehen ist.

## Beschreibung

Die vorliegende Erfindung betrifft Getriebesysteme, insbesondere Handschaltgetriebe, Automatgetriebe oder automatisierte Getriebe, gemäß dem Oberbegriff des Patentanspruchs 1

Bei Getriebesystemen ist es üblich, dass für Getriebe, Nebenabtriebe, Retarder, Schaltelemente, Schalter usw. jeweils separate Elektro- und Luftanschlüsse vorgesehen sind.

Des weiteren ist aus dem Stand der Technik bekannt, für einzelne Komponenten eines Getriebesystems separate Entlüftungseinrichtungen vorzusehen.

Aus der EP 0 939 250 B1 ist ein Verfahren und eine Vorrichtung zur Entlüftung eines Getriebes bekannt. Die bekannte Getriebeentlüftungseinrichtung weist ein Standrohr auf, das über ein erstes Ende, ein zweites Ende und einen sich axial zwischen dem ersten und dem zweiten Ende erstreckenden Zwischenabschnitt verfügt. Das erste Ende des Standrohrs trägt einen Gewindebereich, der mit dem Getriebe verschraubt werden kann und so bemessen ist, dass er der Ausbildung eines sich darüber erstreckenden Films des Schmierfluids entgegenwirkt. Das zweite Ende des Standrohrs hat wenigstens eine Fläche zur Übertragung eines Drehmoments auf das Standrohr. Der Zwischenabschnitt weist einen axial verlaufenden Kanal und wenigstens einen radial verlaufenden Kanal auf. Die Entlüftungseinrichtung verfügt über einen zur Aufnahme eines Filters eingerichteten Topf, der mit einem ersten Ende an dem Standrohr befestigt ist und wenigstens eine Öffnung aufweist. An dem Standrohr ist eine Haube befestigt und zwischen der Haube und dem Standrohr ist ein Filter angeordnet. Das bekannte Verfahren zur Entlüftung eines Getriebes zeichnet sich durch eine Verringerung des Fluid- und Dampfaustriebs aus.

Des weiteren sind Mehrgruppengetriebe, umfassend einen Getriebesteller bekannt, bei denen im Gehäuse ein Entlüftungskanal vorgesehen ist, der sich von einer am Getriebegehäuse vorgesehenen Getriebetasche zum Einbau des Getriebestellers bis zum Abtriebssensor erstreckt, wobei die Getriebetasche auch als Sammelraum für die Abluft der Pneumatik dient.

Der vorliegenden Erfindung liegt die Aufgabe zugrunde, ein Getriebesystem, insbesondere ein Handschaltgetriebe, ein Automatgetriebe oder ein automatisiertes Getriebe anzugeben, dessen Zuverlässigkeit erhöht und dessen Montage vereinfacht ist.

Diese Aufgabe wird durch die Merkmale der unabhängigen Patentansprüche 1 und 3 gelöst. Vorteilhafte Ausgestaltungen gehen aus den entsprechenden Unteransprüchen hervor.

Demnach wird ein Getriebesystem vorgeschlagen, bei dem die Luft- und Elektroanschlüsse der Getriebesystemkomponenten zusammengefasst sind, wobei, wenn dies konstruktiv möglich ist, jeweils ein Anschluss pro Getriebesystem vorgesehen ist.

Gemäß der Erfindung sind zudem die Entlüftungen von Getriebe, Nebenabtrieben und Getriebesteuerung in vorteilhafter Weise zu einer zentralen Entlüftung zusammengefasst.

Dadurch kann eine verbesserte Abdichtung gewährleistet werden, da nur eine Öffnung vorgesehen ist; des weiteren kann die Entlüftung, z,B, durch eine Schlauchentlüftung in der Fahrzeug-Kabine, optimal gestaltet werden.

Durch die erfindungsgemäße Konzeption wird die Montage am Fahrzeug erheblich vereinfacht; zudem wird durch die reduzierte Anzahl an Leitungen die Zuverlässigkeit in vorteilhafter Weise erhöht.

## Patentansprüche

1. Getriebesystem, insbesondere Handschaltgetriebe, Automatgetriebe oder automatisiertes Getriebe, **dadurch gekennzeichnet, dass** die Luft- und Elektroanschlüsse der Komponenten des Getriebesystems zusammengefasst sind, wobei, wenn dies konstruktiv möglich ist, jeweils ein Anschluss pro Getriebesystem vorgesehen ist.

2. Getriebesystem, insbesondere Handschaltgetriebe, Automatgetriebe oder automatisiertes Getriebe nach Anspruch 1, **dadurch gekennzeichnet, dass** die Luft- und Elektroanschlüsse des Getriebes, der Nebenabtriebe, des Retarders, der Schaltelemente und/oder der Schalter zusammengefasst sind.

3. Getriebesystem, insbesondere Handschaltgetriebe, Automatgetriebe oder automatisiertes Getriebe, **dadurch gekennzeichnet, dass** die Entlüftungen von Getriebe, Nebenabtrieben und Getriebesteuerung zu einer zentralen Entlüftung zusammengefasst sind.

4. Getriebesystem, insbesondere Handschaltgetriebe, Automatgetriebe oder automatisiertes Getriebe nach Anspruch 3, **dadurch gekennzeichnet, dass** in der Fahrzeug-Kabine eine Schlauchentlüftung vorgesehen ist.
